# EUROPEAN PATENT SPECIFICATION

(11) **EP 2 699 018 B1**
(45) Date of publication and mention of the grant of the patent: **08.11.2017**
(21) Application number: 13180903.0
(22) Date of filing: 19.08.2013
(51) Int. Cl.: B60R 11/02, H04R 1/34, B60N 2/48, B60R 11/00

(54) **A vehicle comprising a loudspeaker having a sound guide opening into a head rest of the vehicle**
Fahrzeug mit Lautsprecher mit einer akustischen Führungsöffnung in eine Kopfstütze des Fahrzeugs
Véhicule comprenant un haut-parleur présentant une ouverture de guidage acoustique dans un appuie-tête de véhicule

(30) Priority: 17.08.2012 DK 201200508
(43) Date of publication of application: 19.02.2014
(73) Proprietor: Harman Becker Gépkocsirendszer Gyártó Korlátolt Felelösségü Társaság, H-8000 Székesfehérvár (HU)
(72) Inventor: Præstgaard, Poul Luxhøj, DK-7600 Struer (DK)
(74) Representative: Westphal, Mussgnug & Partner Patentanwälte mbB

(56) References cited:
- WO-A1-93/15633
- US-A- 5 147 109
- US-A- 6 112 847
- US-A1- 2003 152 245
- US-A1- 2004 021 350

## Description

The present invention relates to the use of a loudspeaker having a sound guide for transporting sound from the loudspeaker to an output, and in particular to a vehicle comprising the loudspeaker and sound guide where the sound guide opens into a headrest of the vehicle.

Loudspeakers with sound guides may be seen in US6574344, US7508952, JP11239395, JP02288596, JP03204298, US 2003/0152245, WO 93/15633, US 2004/0021350, US 5,147,109, EP0457487.

In afirstaspect, the invention relates to a vehicle according to claim 1.

In the present context, a vehicle may be any type of element configured to transport or be driven by one or more persons, such as a car, a bus, a van, a ship, a boat, an airplane, or a train.

The frame of the vehicle is an element which forms a basic structure of the vehicle. Normally, a vehicle frame is made from multiple elements fixed to each other. Often, the frame is a construction of tubular or elongated elements, but monocoque (single shell) structures exist.

In one situation, the seat is fixed, usually translatably, to the frame.

A seat is an element configured to support one or more persons while sitting. A seat may be a monolithic element supporting both the person's upper legs, bottom/ behind/backside, as well as the lower back, the upper back and the neck/head, or the seat may have different parts for supporting different parts of the person. In some situations, the back and head are supported by a monolithic element.

A head rest portion is a portion against which the person may rest his/her head, usually the neck/back of the head, and/or which may be used for limiting excessive movement of the users head during accelerations/crash or the like.

Usually, a seat is configured to support a back side of a person while sitting or tilted more or less backward. The seat portion thus is configured to support the behind an optionally the upper parts of the legs, and the back portion is configured to support at least the lower back of the person. The back portion may extend from the seat portion to the head rest portion and/or the back portion may support the head rest portion and/or connect the head rest portion to the seat portion or the frame.

Usually, the back portion is more or less vertical and the seat portion is more or less horizontal.

The seat portion may be movable (vertically, horizontally and/or rotationally) in relation to the frame, and the back portion usually is rotatable in relation to the seat portion. The head rest portion may be translatable and/or rotatable in relation to the back portion.

A loudspeaker is an element configured to output sound, usually as a result of receiving a signal. The sound usually will correspond (in frequency, phase and/or intensity) to the signal received, and the signal usually is electrical, even though it may alternatively be optical and/or wireless (Wi-Fi, Bluetooth or the like). The loudspeaker may be or may comprise a transducer configured to convert an electrical signal into sound.

The loudspeaker may, as is described later, be active, i.e. comprising an internal amplifier, or be passive and receive a signal fed directly to a transducer converting the input signal into sound.

The loudspeaker has an active area which normally is the area moving in order to generate the sound. This area thus may be a membrane, a piezo element, a diaphragm or the like. The size of this area usually is calculated in a plane perpendicular to the direction of movement of the membrane or area or in a general direction of the sound output. Alternatively or additionally, the area may be determined in a plane perpendicular to an axis of symmetry of the loudspeaker or active area, if such an axis exists.

In this context, a sound guide preferably is an oblong element having one or more channels configured to guide therein sound. The sound guide inlet may be an element or a surface in which one or more openings exist into the channel(s). This surface may be plane or have any desired shape. In a preferred embodiment, the surface conforms to a surface of the loudspeaker, so that sound from the loudspeaker is fed solely or primarily into the sound guide. Also, preferably, the loudspeaker has an active surface (such as a membrane) or a sound output opening, where the opening(s) in the surface into the sound guide is/are provided within an area corresponding to that (in size and/or shape) of the active surface or output. Even more preferably, the openings cover at least 50%, such as at least 60%, preferably at least 70%, such as at least 80%, such as at least 90% of an area of the active surface or output.

In this context, an "oblong" element is an ele-ment which, in one direction, is at least twice as long as in a direction perpendicular to the one direction.

Preferably, a cross section, in a plane perpendicular to a direction of sound propagation and/or a longitudinal direction of the elongate or oblong sound guide, of the channel(s) is also at least 50%, such as at least 60%, preferably at least 70%, such as at least 80%, such as at least 90% of the area of the active surface or output, so that the overall air particle velocity of the air in the channel(s) is not much higher than that at the surface of the active area. The cross section of the channel(s) may increase in the direction toward the outlet(s) if desired.

The sound guide outlet may be provided in or as an element or a surface in which the opening(s) exist into the channel(s). Also this surface or element may have any shape and dimension. As will be described below, an elongated shape is preferred.

When the sound guide outlet is positioned in the head rest portion and the loudspeaker is fastened to the seat portion, the back portion or the frame, a user is not in danger of injuring his/her head against the loudspeaker during e.g. a collision where the head may be forced toward the head rest portion.

In a preferred embodiment, the sound guide comprises a plurality of sound guiding channels. The number of sound guiding channels extending from the sound guide inlet to the sound guide outlet is chosen to avoid sloshing of the acoustic wave in the individual sound guiding channels. In a preferred embodiment the cross-sectional area of each sound guiding channel(s) is no more than 1cm², such as no more than 0.8 cm², such as no more than 0.7 cm², such as no more than 0.5 cm².

Any number of channels may be used, such as 10-200, preferably 12-150, such as 15-30, for example.

The cross-sectional shape of the sound guiding channels may be chosen as desired. In a preferred embodiment, the sound guiding channels are distributed as minor sectors of a circle such that all sound guiding channels have openings at the sound inlet comprising equal sectors that together form a whole circle. In another embodiment, the sound guiding channels may have a hexagonal cross-section and may be placed at the sound inlet in a honeycomb structure. In a further embodiment, the sound guiding channels may be circular. In the preferred embodiment, as described above, the fill factor of the sound inlet is optimised to the dimensions of the sound source or loudspeaker.

In addition, in a preferred embodiment, the cross-sectional area of the individual sound guiding channels may be constant along the length of the sound guiding channel, however, the cross-sectional shape of the sound guiding channel may change along its length in order to achieve a different form factor at the sound outlet.

Furthermore, in a preferred embodiment, the length of the sound guiding channels is designed in accompaniment with the form factor, position and direction of the sound outlet with respect to the user's listening position in order to achieve a desired directivity of the sound field radiating from the sound outlet such that, for example, the sound field radiates towards the user's ears. In a preferred embodiment, the sound guide outlet has an oblong form factor placed vertically in the headrest and the lengths of the individual sound guiding channels are designed to achieve a spherical sound wave. In another embodiment, the lengths of the sound guiding channels may be equal such that the radiating pattern from a plane oblong sound outlet would equate to a traditional line source.

In one embodiment, the sound guide outlet is a monolithic unit. When the sound guide comprises a single sound guiding channel, or when the sound guide is a single element comprising therein the channels, such as if the channels are extruded in the same step, the sound guide outlet usually is monolithic. When the sound guide comprises individually formed channels, the monolithic unit may be provided by interconnecting the channels at least at the output end. The advantage of the monolithic unit is that the positioning and handling is facilitated.

In that or another embodiment, the sound guide is made from a soft material. In particular, it is preferred that at least a part of the sound guide positioned within the head rest portion is made of the soft material. In this connection, a soft material is e.g. rubber, PVC, PP, PEE, PU or the like. The soft material may be solid or e.g. provided as a foam. If individual sound conducting channels are provided, these may comprise a wall material of a soft material, and the channels may be interconnected, such as glued, together using the same or another, preferably soft, material.

An advantage of the soft sound guide is that during a crash, the user's head may be forced violently against the head rest portion, whereby a hard loudspeaker therein may injure the user. Providing therein a soft sound guide, on the other hand, may cushion the head in the same manner as the remaining cushioning of the head rest portion. A cushioning for this use usually will have openings allowing the propagation of the sound to the outlet. The cushioning can be covered by acoustically transparent fabric or leather/fabric with openings like holes.

In one embodiment, the loudspeaker is positioned within the seat portion or the back portion. Preferably, the loudspeaker is positioned in a position where the user, even during a crash, is not brought into contact therewith. The loudspeaker usually is fixed to the back portion or seat portion. The back portion or seat portion usually will have a cushioning between the user and a frame thereof, and in this situation, the loudspeaker may be positioned on the frame side of the cushioning.

The sound guide outlet is oblong and positioned along a generally vertical axis. Thus, if the outlet has one opening, this is provided as an oblong outlet opening. If multiple openings are provided in the sound guide outplet, these outlets are then provided in a pattern or in positions generally along the generally vertical axis. An oblong sound outlet, or outlets positioned in this manner, thus outputs sound along a vertical surface, whereby different user heights may be taken into account without adapting the seat, such as adapting the height of the head rest portion over e.g. a seat portion of the seat.

This is especially interesting when the height of the head rest portion above the seat portion is not adjustable, such as when the head rest portion is fixed to the back portion or the seat portion.

Different user heights usually will position different user's ears at different vertical positions relating to the head rest portion.

The oblong sound output or oblong area having the outputs may be positioned, within the head rest portion, at a position at or behind the user's ear.

Naturally, multiple sound outputs, such as from a plurality of sound guides may be provided so that an output may be provided for each ear of the user. Preferably, the outputs are positioned symmetrically around a vertical symmetry axis of the head rest portion so as to be positioned symmetrically around the user's head.

Using a single loudspeaker may provide sound for the user's ears in mono.

In a preferred embodiment, however, the vehicle comprises an additional loudspeaker and an additional sound guide having a second guide sound inlet and a second sound guide outlet, the additional sound guide being configured to guide sound from the second sound guide inlet positioned at the additional loudspeaker to the second sound guide output, where the additional sound guide comprises a second plurality of sound guiding channels extending from the second sound guide inlet to the second sound guide outlet and wherein the second sound guide outlet is positioned in the head rest portion, the sound guide outlet and the second sound guide outlet being positioned, in the head rest portion, on different sides of a vertical centre axis thereof.

Using multiple loudspeakers, stereo sound or any other mix of source signals may be provided.

Preferably, the vehicle further comprises a sound source configured to output a signal and a signal processing element configured to adapt the signal to an acoustical interaction taking place in the sound guide between sound input and the sound output.

Naturally, the sound provided should stem from somewhere. The actual source thereof is not relevant. The source could be a radio tapping an airborne signal, a computer accessing a local music storage or a remote storage, such as via the Internet and a wired or wireless connection. A mobile telephone may access a local or remote audio storage, such as a streaming service streaming radio or audio to the mobile telephone. Naturally, a local source may be a RAM, Flash, Hard drive storage or the like, or the storage may be a CD-ROM, DVD drive or the like. The sound source can also be the guiding voice from a build-in or added car navigation system

Irrespective of the source, a signal is provided which eventually is desired fed to the loudspeaker(s). This signal may be electrical, optical, wired or wireless. Usually, the signal comprises information relating to frequency and intensity, and the loudspeaker is desired to output a sound with the same characteristics.

However, naturally, the sound guide, whether provided as a single, oblong channel or a plurality of channels, will have an effect on the sound transported thereby. This effect may be estimated or determined and subsequently counter-acted by e.g. filtering the signal fed to the loudspeaker(s) so that the sound emitted from the sound guide has the desired characteristics. Parameters such as the frequency, the gain and the Q-value may be adapted.

In addition, as the sound is emitted from the head rest portion and thus usually from behind the user, a further processing may be performed in order to adapt the sound so that it sounds as if coming from in front of the user. This adaptation of the sound is also a known effect which has been investigated.

The sound processing may be performed in a sound processor, such as a DSP, an ASIC, an FPGA or the like, software programmed or hardwired. The processor may be used also for other tasks, such as controlling other operations of the vehicle, the generation or accessing of the signal from the source or the like.

A second aspect of the invention relates to a seat according to claim 9.

The comments relating to the first aspect are equally valid for the second aspect. Thus, the embodiments comprising the soft sound output and/or the sound guiding channels are equally desired in the present aspect of the invention.

A seat for a vehicle may be a seat comprising fastening element for fastening the seat to e.g. a vehicle frame or floor.

A third aspect of the invention relates to a method of outputting sound in a vehicle having a seat according to the second aspect of the invention, the method comprising:
- outputting the sound from a loudspeaker positioned in the seat portion, the back portion or which is fastened to a frame of the car,
- guiding the sound in a sound guide, having a sound input and a sound output, from the loudspeaker to the sound output positioned in the head rest portion.

Again, all comments made above are equally valid in relation to this aspect of the invention.

Usually, the outputting of sound from a loudspeaker is caused by feeding a signal, usually an electrical signal, to the loudspeaker.

The guiding step will guide sound to the head rest portion, from where the sound will escape or be emitted, so that the user can hear it.

Usually, the sound guide output is positioned at or directed toward a surface of the head rest portion at which the user is supposed to rest his/her head.

In one embodiment, the guiding step comprises guiding the sound within a sound guide having therein a plurality of sound guiding channels extending from the sound guide input to the sound guide output. Usually, all channels extend from the sound guide input to the sound guide output and individually transport sound. Usually, the sound transported by all channels is the same.

In that or another embodiment, the outputting step comprises outputting the sound from the sound from an elongated sound outlet having a generally vertical, longitudinal axis. This, as described above, is particularly interesting when the head rest portion is fixed to the seat portion and/or the back portion.

In one embodiment, the method further comprises the steps of:
- outputting sound from an additional loudspeaker positioned in the seat portion or the back portion,
- guiding the sound from the additional loudspeaker in a second sound guide, having a second sound guide input and a second sound guide output, from the additional loudspeaker to the second sound guide output positioned in the head rest portion, the sound guide output and the second sound guide output being positioned, in the head rest portion, on different sides of a vertical centre axis thereof.

In one embodiment, the method further comprises the steps of providing a signal, adapting the signal to an acoustical interaction taking place in the sound guide between sound input and the sound output and feeding the adapted signal to the loudspeaker.

In the following, preferred embodiments of the invention will be described with reference to the drawing, wherein:
- figure 1 illustrates a seat provided inside a vehicle and comprising an embodiment of the invention,
- figure 2 illustrates an assembly of a loudspeaker and a sound guide,
- figure 3 illustrates one embodiment of a sound guide and
- figure 4 illustrates another embodiment of a sound guide.

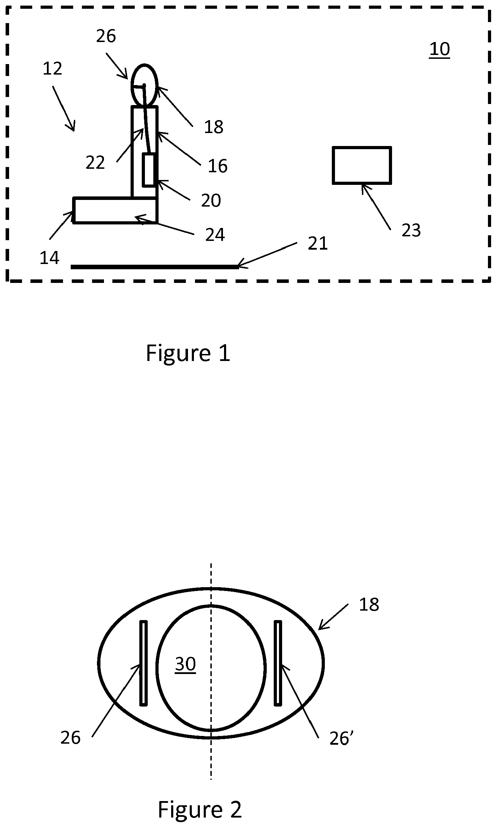

In figure 1, a vehicle 10 is indicated inside which is positioned a chair 12, such as a driver's seat, having a seat portion 14, a back portion 16 and a head rest portion 18.

In the back portion 16, a loudspeaker 20 is positioned. Alternatively, the loudspeaker 20 may be provided in the seat portion 14 or fixed to a frame 21 of the vehicle.

Connected to the loudspeaker 20 is a sound guide 22 configured to guide sound from the loudspeaker 20 to the headrest portion 18. The sound guide has a sound guide input 24 and a sound guide output 26.

The loudspeaker 20 may be any type of loudspeaker, such as a loudspeaker based on a piezo electric element, an electrostatic or magnetostatic loudspeaker, an electrodynamic loudspeaker or the like. The loudspeaker may be a single element outputting all frequencies required, or it may comprise therein several speakers all outputting sound into the sound guide 22. In this last situation, the loudspeaker may comprise a housing inside which several speakers are present, the housing having an opening from which sound exits the housing and enters the sound guide 22.

The head rest portion 18 may be fixed to the seat portion 14 or the back portion. In some seat types, the head rest portion 18 is integral with and thus not movable in relation to, the back portion 16. In this situation, there is little limitation on the extend and thus cross section on the sound guide 22, compared to the situation where the head rest portion 14 is connected to the back portion 16 through two thin metallic rods which in that situation might have been preferred to have therein the sound guide 22.

In figure 2, the head rest portion 18 is seen from the side from which the head of the user 30 rests thereon during e.g. driving, i.e. the front thereof. The position of the output 26 of the sound guide 22 is illustrated, even though this output usually is not visible from the outside of the head rest portion 18, such as if covered by a fabric layer. In fact, two outputs 26 and 26' are illustrated for providing sound to each of the ears of the user 30. The outputs 26/26' are provided symmetrically around a vertical symmetry axis illustrated as a hatched line.

Naturally, the outputs 26/26' may be fed by the same loudspeaker 20, so as to provide sound in mono, but preferably, two loudspeakers are provided each feeding sound into a separate sound guide, where the two sound guides have the openings 26/26', so that stereo sound may be provided. Equally naturally, multiple other sound sources may be provided in the vehicle, such as from different other positions (usually in front and from the sides) so as to provide multiple channel audio.

It is seen that the outputs 26/26' are oblong with a longitudinal direction along the longitudinal direction of the user (upper body or head) and/or vertically, whereby different user heights may be taken into account, so that the outputs 26/26' may be provided close to the ears of users of different heights without having to alter the height of the head rest portion 18.

Naturally, the sound guide may be a single tube or channel guiding sound from the loudspeaker to the head rest portion. However, another type of sound guide is preferred.

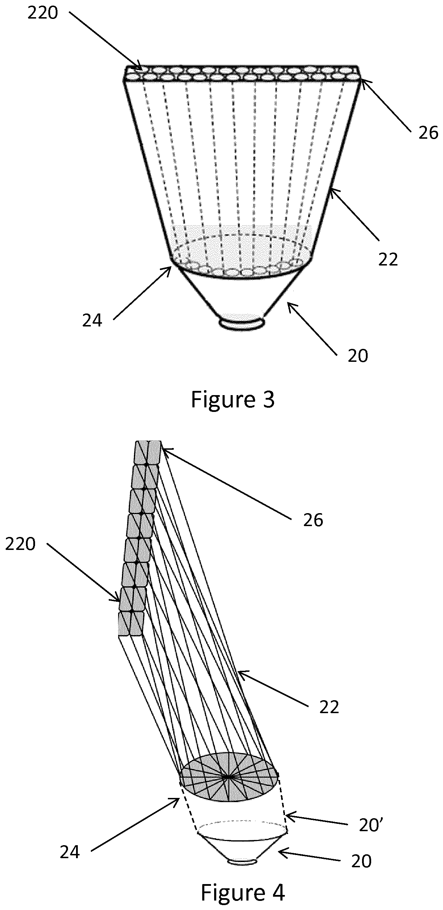

In Figure 3, an assembly of a loudspeaker 20 and a sound guide 22 is seen, where the sound guide comprises a plurality of more narrow channels 220 which, at the loudspeaker 20, cover a major part of the active area or part (usually the membrane) of the loudspeaker 20 (or an output from a speaker housing) and which, at the output end 26, have a different cross section or positional relationship. This is obtainable by arranging the sound channel openings at the input end 24 in one manner, so as to receive as much of the generated sound as possible, and arranging the sound channel openings at the output end 26 in another manner, so as to obtain the desired sound outlet geometry which in general may be an oblong shape.

In figure 4, another manner of obtaining a good overlap between the input end 24 and the loudspeaker 20 is seen wherein the input openings are pie-shape-shaped while the outputs are now made rectangular while maintaining the overall cross sectional area of each channel essentially the same along its length.

Naturally, a difference in length of the channels 220 will generate a difference in phase of the sound output from the individual channel 220. When multiple channels 220 are used, the relative positions of the outlets at the output end 26 and the pertaining channel lengths 220 will thus be able to determine or tune a direction of the sound output from the output end 26. Thus, in one situation, the individual channels 220 have the same length, and in other situations, the relative positions of the outlets of the channels 220 at the output end 26 and the lengths of the invidual channels 220 are selected to obtain a desired output characteristic, such as output direction, of the sound output of the output end 26.

The channels 220 may be generated in any manner, such as by extruding or otherwise providing each individual channel 220 and subsequently assembling these in the patterns or arrangements desired.

The channels 220 may have any size and cross sectional shape, such as circular, oval, triangular, square, pentagon, hexagon, heptagon or a geometrical figure having any number of sides. Naturally, it is desired that the channel openings cover as much of the input end 24 as possible so that the combined or added channel opening area is as close as possible to the active area of the loudspeaker 20 or the speaker opening.

Thus, the overall cross sectional shape of the sound guide 22 may change along its length, but the overall cross sectional area of the channels 220 thereof preferably is the same along the length or may be gradually expanding.

It is noted that the actual path or pattern of the sound guide channels 220 along the length of the sound guide 22 may be selected as desired, The channels 220 may be assembled or individually provided so as to make room for other elements in the seat. The channels 220 may be divided into separate channels or groups which may take different routes from the loudspeaker 20 to the output end 26.

The channels 220 may be assembled, such as fixed to each other, at the input end 24 and/or the output end 26 as well as - or as an alternative - along all of or a part of the length thereof.

Preferably, each channel 220 has at least substantially the same cross section along its length, but it may be sufficient that the cross sectional area of the channel does not vary too much along the length, as the cross sectional area may be chosen so that the sound travelling therein travels more or less as a wave front. Thus, sloshing of the sound inside the channel are prevented, which would have a detrimental effect on the sound.

Naturally, the use of the sound guide 22 will generate a timbre change compared to the sound output by the loudspeaker 20, but this may be counter-acted by equalizing the signal fed to the loudspeaker. The combination of said equalising, loudspeaker and sound guide will then give the desired timbral performance.

Naturally, a gasket may be provided between the sound guide 22 and the loudspeaker 20 en ensure that the sound guide 22 is sealed and no undesired sound is emitted from the interface. A system can also be realized with an open loudspeaker cabinet or other systems e.g. a closed box or using the interior of the seat as en enclosure. In this manner, the sound guide 22 may be attached directly, or via the gasket, on to the loudspeaker 20 to have a minimal volume between the loudspeaker membrane and the channel(s).

Alternatively, a housing, 20' in figure 4, may be provided between the loudspeaker 20 and the sound guide 22. In this situation, the cross section of the housing 20' in a plane perpendicular to a direction from the loudspeaker 20 to the sound guide 22, preferably is between 50% and 150%, preferably between 75% and 125%, of the area of the membrane in the same plane, so as to again have the air particle velocity between the membrane and the output 26 be more or less the same. This housing 20' may be used for adapting one cross sectional shape of a loudspeaker 20 to a sound guide 22 with another cross sectional shape, for example.

Another advantage of the use of the sound guide 22 may be seen when the sound guide 22 is made of a resilient material, and in particular a part thereof at the output end 26 or within the head rest portion 18.

In a car crash, the user 30 usually will be exposed to accelerations forcing the user's head 30 into the head rest portion 18 and thus, in the present vehicle, potentially toward this part of the sound guide 22. If this part of the sound guide 22 is made of a resilient material, this may not damage the user more than any head rest portion 18 without a sound guide 22.

The loudspeaker 20, which is usually relatively hard, may then be positioned in other positions in the back portion 16, the seat portion 14 or fixed to the frame of the vehicle, where e.g. the seat may cushion the user from the impact on the loudspeaker 20 or toward which the user is not forced during a crash.

Suitable, soft or resilient, materials for the sound guide 22 and/or the channels 220 are PVC, poly propylene, poly ethylene, poly urethane, rubber or the like. The channels 220 may be made from a solid material or a closed foam, an open foam, or the like.

The channels 220 may, at the output end 26, be fixed to each other, such as by gluing these together or by softening the material of the channels and fixing them to each other by providing contact after softening. The channels can be straight, angled or curved in any shape to connect the sound inlet to the sound outlet.

The glue may be any glue, such as a resilient glue.

The channels 220 may also be fixed to each other using other types of materials, such as those mentioned above. The channels 220 may be made of another type of material than one, if existing, used for fixing these to each other.

Typical physical dimensions of the components that constitute a preferred embodiment are:
- Sound guide total input diameter of 5 cm.
- Individual sound guide channel diameter of 0,5 cm, number of channels16.
- Sound guide wall material thickness 0.1 cm.

Naturally, if the loudspeaker 20 is fixed to the seat portion 14 or the back portion 16, a signal may be fed to the loudspeaker from e.g. a signal source 23, such as a radio, a computer, a media player or the like. The source 23 may comprise a filter, an equalizer, an amplifier or the like, and may have a single of such elements or one such element for each loudspeaker 20 if desired. The source will provide (receive or access) a signal representing audio and will feed a signal to each loudspeaker for controlling the loudspeaker(s).

The loudspeakers 20 may be active, i.e. comprising their own amplifiers, or not. The loudspeakers may be controllable via an optical, an electrical and/or a wireless signal.

If the loudspeaker is fixed to the vehicle frame 21, the sound guide 22 will extend to the seat 12. Usually, the seat 12 is translatable in relation to the frame 21, but as the sound guide 22 may be flexible, this translation is easily accommodated.

## Claims

1. A vehicle (10) comprising:
- a frame (21),
- at least one seat (12) having a head rest portion (18) and a seat portion (14) and/or a back portion (16),
- a loudspeaker (20) having a membrane area,
- an oblong sound guide (22) comprising one or more sound guiding channels (220) and having a sound guide inlet (24) having one or more sound inlets each opening into a channel and a sound guide outlet (26, 26') having one or more sound outlets each opening into a channel, the sound guide being configured to guide sound in the channel or channel outlet, from the sound guide inlet positioned at the loudspeaker to the sound guide outlet,
the sound guide outlet being positioned in the head rest portion and the loudspeaker being fastened to the seat portion, the back portion or the frame,
where a total cross section of the opening or openings in the sound guide inlet is at least 50% of a cross section of the membrane area
**characterized in that** the sound guide outlet (26, 26') is oblong and positioned along a generally vertical axis.

2. A vehicle according to claim 1, wherein the sound guide comprises a plurality of sound guiding channels.

3. A vehicle according to claim 1 or 2, wherein the sound output is a monolithic unit.

4. A vehicle according to any of the preceding claims, wherein the sound guide is made from a soft material.

5. A vehicle according to any of the preceding claims, wherein the loudspeaker is positioned within the seat portion or the back portion.

6. A vehicle according to any of the preceding claims, wherein the head rest portion is fixed to the seat portion and/or back portion.

7. A vehicle according to any of the preceding claims comprising an additional loudspeaker and an additional sound guide having a second sound inlet and a second sound outlet, the additional sound guide being configured to guide sound from the second sound inlet positioned at the additional loudspeaker to the second sound outlet, where the additional sound guide comprises a second plurality of sound conducting tubes extending from the second sound inlet to the second sound outlet and wherein the second sound outlet is positioned in the head rest portion, the sound output and the second sound output being positioned, in the head rest portion, on different sides of a vertical centre axis thereof.

8. A vehicle according to any of the preceding claims, further comprising a sound source configured to output a signal and a signal processing element configured to adapt the signal to an acoustical interaction taking place in the sound guide between sound input and the sound output.

9. A seat for a vehicle according to claim 1, the seat (12) comprising:
- a seat portion (14) and/or a back portion (16),
- a head rest portion (18),
- a loudspeaker (20, 20') having a membrane area,
- an oblong sound guide (22) comprising one or more sound guiding channels (220) and having a sound guide inlet (24) having one or more sound inlets each opening into a channel and a sound guide outlet (26, 26') having one or more sound outlets each opening into a channel, the sound guide being configured to guide sound in the channel or channels from the sound guide inlet positioned at the loudspeaker to the sound guide outlet,
the sound guide outlet being positioned in the head rest portion and the loudspeaker being fastened to the seat portion or the back portion,
where a total cross section of the opening or openings in the sound guide inlet is at least 50% of a cross section of the membrane area,
**characterized in that** the sound guide outlet (26, 26') is oblong and positioned along a generally vertical axis.

10. A method of outputting sound in a vehicle having a seat according to claim 9, the method comprising:
- outputting the sound from a loudspeaker positioned in the seat portion, the back portion or which is fastened to a frame of the car,
- guiding the sound in a sound guide, having a sound input and a sound output, from the loudspeaker to the sound output positioned in the head rest portion.

11. A method according to claim 10, wherein the guiding step comprises guiding the sound within a sound guide having therein a plurality of sound guiding channels extending from the sound input to the sound output.

12. A method according to claim 11 or 12, wherein the head rest portion is fixed to the seat portion and wherein the outputting step comprises outputting the sound from the sound from an elongate sound outlet having a generally vertical, longitudinal axis.

13. A method according to any of claims 10-12, further comprising the steps of:
- outputting sound from an additional loudspeaker positioned in the seat portion or the back portion,
- guiding the sound from the additional loudspeaker in a second sound guide, having a second sound input and a second sound output, from the additional loudspeaker to the second sound output positioned in the head rest portion, the sound output and the second sound output being positioned, in the head rest portion, on different sides of a vertical centre axis thereof.

14. A method according to any of claims 10-13, further comprising the steps of providing a signal, adapting the signal to an acoustical interaction taking place in the sound guide between sound input and the sound output and feeding the adapted signal to the loudspeaker.

## Patentansprüche

1. Fahrzeug (10), umfassend:
- einen Rahmen (21),
- mindestens einen Sitz (12), der einen Kopfstützenabschnitt (18) und einen Sitzabschnitt (14) und/oder einen Rückenabschnitt (16) aufweist,
- einen Lautsprecher (20), der eine Membranfläche aufweist,
- eine längliche Schallführung (22), die einen oder mehrere Schallführungskanäle (220) umfasst und die einen Schallführungseinlass (24) aufweist, der einen oder mehrere Schalleinlässe aufweist, die sich jeweils in einen Kanal öffnen, und einen Schallführungsauslass (26, 26') aufweist, der einen oder mehrere Schallauslässe aufweist, die sich jeweils in einen Kanal öffnen, wobei die Schallführung konfiguriert ist, um Schall in dem Kanal oder den Kanälen von dem Schallführungseinlass, der am Lautsprecher positioniert ist, zu der Schallführung zu führen, wobei der Schallführungsauslass in dem Kopfstützenabschnitt positioniert ist und der Lautsprecher an dem Sitzabschnitt, dem Rückenabschnitt oder dem Rahmen befestigt ist,
wo ein Gesamtquerschnitt der Öffnung oder Öffnungen in dem Schallführungseinlass mindestens 50 % eines Querschnitts der Membranfläche beträgt,
**dadurch gekennzeichnet, dass** der Schallführungsauslass (26, 26') länglich und entlang einer im Allgemeinen vertikale Achse positioniert ist.

2. Fahrzeug nach Anspruch 1, wobei die Schallführung eine Vielzahl Schallführungskanäle umfasst.

3. Fahrzeug nach Anspruch 1 oder 2, wobei die Schallausgabe eine monolithische Einheit ist.

4. Fahrzeug nach einem der vorhergehenden Ansprüche, wobei die Schallführung aus einem weichen Material gemacht ist.

5. Fahrzeug nach einem der vorhergehenden Ansprüche, wobei der Lautsprecher innerhalb des Sitzabschnitts oder des Rückenabschnitts positioniert ist.

6. Fahrzeug nach einem der vorhergehenden Ansprüche, wobei der Kopfstützenabschnitt an dem Sitzabschnitt und/oder Rückenabschnitt fixiert ist.

7. Fahrzeug nach einem der vorhergehenden Ansprüche, umfassend einen zusätzlichen Lautsprecher und eine zusätzliche Schallführung, die einen zweiten Schalleinlass und einen zweiten Schallauslass aufweist, wobei die zusätzliche Schallführung konfiguriert ist, um den Schall von dem zweiten Schalleinlass, der an dem zusätzlichen Lautsprecher positioniert ist, zu dem zweiten Schallauslass zu führen, wo die zusätzliche Schallführung eine zweite Vielzahl von Schallleitungsrohren umfasst, die sich von dem zweiten Schalleinlass zu dem zweiten Schallauslass erstrecken und wobei der zweite Schallauslass in dem Kopfstützenabschnitt positioniert ist und wobei die Schallausgabe und die zweite Schallausgabe in dem Kopfstützenabschnitt auf verschiedenen Seiten einer vertikalen Mittelachse davon positioniert sind.

8. Fahrzeug nach einem der vorangehenden Ansprüche, ferner umfassend eine Schallquelle, die konfiguriert ist, um ein Signal auszugeben, und ein Signalverarbeitungselement, das konfiguriert ist, um das Signal an eine akustische Wechselwirkung anzupassen, die in der Schallführung zwischen einer Schalleingabe und der Schallausgabe stattfindet.

9. Sitz für ein Fahrzeug nach Anspruch 1, wobei der Sitz (12) umfasst:
- einen Sitzabschnitt (14) und/oder einen Rückenteil (16),
- einen Kopfstützenabschnitt (18),
- einen Lautsprecher (20, 20'), der eine Membranfläche aufweist,
- eine längliche Schallführung (22), die einen oder mehrere Schallführungskanäle (220) umfasst und die einen Schallführungseinlass (24) aufweist, der einen oder mehrere Schalleinlässe aufweist, die sich jeweils in einen Kanal öffnen, und einen Schallführungsauslass (26, 26') aufweist, der einen oder mehrere Schallauslässe aufweist, die sich jeweils in einen Kanal öffnen, wobei die Schallführung konfiguriert ist, um Schall in den Kanal oder die Kanäle von dem Schallführungseinlass, der am Lautsprecher positioniert ist, zu dem Schallführungsauslass zu führen, wobei der Schallführungsauslass in dem Kopfstützenabschnitt positioniert ist und der Lautsprecher an dem Sitzabschnitt oder dem Rückenabschnitt befestigt ist,
wo ein Gesamtquerschnitt der Öffnung oder Öffnungen in dem Schallführungseinlass mindestens 50 % eines Querschnitts der Membranfläche beträgt,
**dadurch gekennzeichnet, dass** der Schallführungsauslass (26, 26') länglich und entlang einer im Allgemeinen vertikale Achse positioniert ist.

10. Verfahren zum Ausgeben von Schall in einem Fahrzeug, das einen Sitz nach Anspruch 9 aufweist, wobei das Verfahren umfasst:
- Ausgeben des Schalls aus einem Lautsprecher, der in dem Sitzabschnitt, dem Rückenabschnitt positioniert ist oder der an einem Rahmen des Fahrzeugs befestigt ist,
- Führen des Schalls in einer Schallführung, die eine Schalleingabe und eine Schallausgabe aufweist, vom Lautsprecher zur Schallausgabe, die im Kopfstützenabschnitt positioniert ist.

11. Verfahren nach Anspruch 10, wobei der Führungsschritt das Führen des Schalls innerhalb einer Schallführung umfasst, die innen eine Vielzahl von Schallführungskanälen aufweist, die sich von der Schalleingabe zur Schallausgabe erstrecken.

12. Verfahren nach Anspruch 11 oder 12, wobei der Kopfstützenabschnitt an dem Sitzabschnitt fixiert ist und wobei der Ausgabeschritt das Ausgeben des Schalls aus dem Schall aus einem länglichen Schallauslass umfasst, der eine im Wesentlichen vertikale Längsachse umfasst.

13. Verfahren nach einem der Ansprüche 10-12, ferner umfassend die Schritte:
- Ausgeben von Schall aus einem zusätzlichen Lautsprecher, der in dem Sitzabschnitt oder dem Rückenabschnitt positioniert ist,
- Führen des Schalls von dem zusätzlichen Lautsprecher in eine zweite Schallführung, die eine zweite Schalleingabe und eine zweite Schallausgabe aufweist, von dem zusätzlichen Lautsprecher zu der zweiten Schallausgabe, die in dem Kopfstützenabschnitt positioniert ist, wobei die Schallausgabe und die zweite Schallausgabe in dem Kopfstützenabschnitt auf verschiedenen Seiten einer vertikalen Mittelachse davon positioniert sind.

14. Verfahren nach einem der Ansprüche 10-13, ferner umfassend die Schritte des Bereitstellens eines Signals, Anpassen des Signals an eine akustische Wechselwirkung, die in der Schallführung zwischen Schalleingabe und der Schallausgabe stattfindet und Einspeisen des angepassten Signals in den Lautsprecher.

## Revendications

1. Véhicule (10) comprenant :
- une structure (21),
- au moins un siège (12) présentant une partie appuie-tête (18) et une partie siège (14) et/ou une partie arrière (16),
- un haut-parleur (20) présentant une zone membranaire,
- un guide-son oblong (22) comprenant un ou plusieurs canaux de guidage du son (220) et présentant un orifice d'entrée de guide-son (24) présentant un ou plusieurs orifices d'entrée de son débouchant chacun dans un canal et un orifice de sortie de guide-son (26, 26') présentant un ou plusieurs orifices de sortie de son débouchant chacun dans un canal, le guide-son étant configuré pour guider un son dans l'orifice de sortie de canal ou des canaux de l'orifice d'entrée de guide-son positionné au niveau du haut-parleur au guide-son
l'orifice de sortie de guide-son étant positionné dans la partie appuie-tête et le haut-parleur étant fixé sur la partie siège, la partie arrière ou la structure,
où une section transversale totale de l'ouverture ou des ouvertures dans l'orifice d'entrée de guide-son représente au moins 50 % d'une section transversale de la zone membranaire **caractérisé en ce que** l'orifice de sortie de guide-son (26, 26') est oblong et positionné le long d'un axe généralement vertical.

2. Véhicule selon la revendication 1, dans lequel le guide-son comprend une pluralité de canaux de guidage du son.

3. Véhicule selon la revendication 1 ou 2, dans lequel la sortie de son est une unité monolithique.

4. Véhicule selon l'une quelconque des revendications précédentes, dans lequel le guide-son est fait à partir d'un matériau souple.

5. Véhicule selon l'une quelconque des revendications précédentes, dans lequel le haut-parleur est positionné à l'intérieur de la partie siège ou de la partie arrière.

6. Véhicule selon l'une quelconque des revendications précédentes, dans lequel la partie appuie-tête est fixée sur la partie siège et/ou la partie arrière.

7. Véhicule selon l'une quelconque des revendications précédentes, comprenant un haut-parleur supplémentaire et un guide-son supplémentaire présentant un second orifice d'entrée de son et un second orifice de sortie de son, le guide-son supplémentaire étant configuré pour guider un son du second orifice d'entrée du son positionné au niveau du haut-parleur supplémentaire au second orifice de sortie du son, où le guide-son supplémentaire comprend une seconde pluralité de tubes conducteurs de son s'étendant du second orifice d'entrée du son au second orifice de sortie du son et dans lequel le second orifice de sortie du son est positionné dans la partie appuie-tête, la sortie de son et la seconde sortie de son étant positionnées, dans la partie appuie-tête, sur des côtés différents d'un axe central vertical de celui-ci.

8. Véhicule selon l'une quelconque des revendications précédentes, comprenant en outre une source sonore configurée pour délivrer en sortie un signal et un élément de traitement de signal configuré pour adapter le signal à une interaction acoustique prenant place dans le guide-son entre une entrée de son et la sortie de son.

9. Siège d'un véhicule selon la revendication 1, le siège (12) comprenant :
- une partie siège (14) et/ou une partie arrière (16),
- une partie appuie-tête (18),
- un haut-parleur (20, 20') présentant une zone membranaire,
- un guide-son oblong (22) comprenant plusieurs canaux de guidage du son (220) et présentant un orifice d'entrée de guide-son (24) présentant un ou plusieurs orifices d'entrée de son débouchant chacun sur un canal et un orifice de sortie de guide-son (26, 26') présentant un ou plusieurs orifices de sortie de son débouchant chacun sur un canal, le guide-son étant configuré pour guider un son dans le canal ou les canaux de l'orifice d'entrée de guide-son positionné au niveau du haut-parleur à l'orifice de sortie de guide-son,
l'orifice de sortie de guide-son étant positionné dans la partie appuie-tête et le haut-parleur étant fixé sur la partie siège où la partie arrière,
où une section transversale totale de l'ouverture ou des ouvertures dans l'orifice d'entrée de guide-son représente au moins 50 % d'une section transversale de la zone membranaire, **caractérisé en ce que** l'orifice de sortie de guide-son (26, 26') est oblong et positionné le long d'un axe généralement vertical.

10. Procédé pour délivrer en sortie un son dans un véhicule présentant un siège selon la revendication 9, le procédé consistant à :
- délivrer en sortie le son depuis un haut-parleur positionné dans la partie siège, la partie arrière ou qui est fixé sur une structure de la voiture,
- guider le son dans un guide-son, présentant une entrée de son et une sortie de son, du haut-parleur à la sortie de son positionnée dans la partie appuie-tête.

11. Procédé selon la revendication 10, dans lequel l'étape de guidage comprend le guidage du son à l'intérieur d'un guide-son présentant à l'intérieur de celui-ci une pluralité de canaux de guidage du son s'étendant de l'entrée de son à la sortie de son.

12. Procédé selon la revendication 11 ou 12, dans lequel la partie appuie-tête est fixée sur la partie siège et dans lequel l'étape consistant à délivrer en sortie consiste à délivrer en sortie le son du son d'un orifice de sortie de son allongé présentant un axe longitudinal, généralement vertical.

13. Procédé selon l'une quelconque des revendications 10 à 12, comprenant en outre les étapes consistant à :
- délivrer en sortie un son à partir d'un haut-parleur supplémentaire positionné dans la partie siège ou la partie arrière,
- guider le son provenant du haut-parleur supplémentaire dans un second guide-son, présentant une seconde entrée de son et une seconde sortie de son, du haut-parleur supplémentaire à la seconde sortie de son positionnée dans la partie appuie-tête, la sortie de son et la seconde sortie de son étant positionnées, dans la partie appuie-tête, sur des côtés différents d'un axe central vertical de celui-ci.

14. Procédé selon l'une quelconque des revendications 10 à 13, comprenant en outre les étapes de fourniture d'un signal, d'adaptation du signal à une interaction acoustique prenant place dans le guide-son entre une entrée de son et la sortie de son et l'envoi du signal adapté au haut-parleur.
